# EUROPEAN PATENT APPLICATION

(11) **EP 4 212 768 A1**
(43) Date of publication of application: **19.07.2023**
(21) Application number: 21866524.8
(22) Date of filing: 24.08.2021
(51) Int. Cl.: F16N 7/32, G01M 17/007

(54) **LUBRICATING OIL SUPPLY DEVICE AND ROTATION TEST APPARATUS EQUIPPED THEREWITH**

(30) Priority: 11.09.2020 JP 2020152740
(71) Applicant: Sinfonia Technology Co., Ltd., Tokyo 105-8564 (JP)
(72) Inventor: OGURA Manabu, Tokyo 105-8564 (JP)
(74) Representative: Angerhausen, Christoph
(86) International application number: PCT/JP2021/030963
(87) International publication number: WO 2022/054564

(57) **Abstract**

Provided is a technique that can prevent a bearing from being damaged by the inertial rotation of a shaft when a power supply is stopped due to a power outage etc. A lubricating oil supply device 6 that supplies lubricating oil to a bearing comprises: a supplier 61 that little by little supplies a lubricating oil stored in a temporary storage 611, which temporarily stores the lubricating oil, to a bearing together with compressed air; a lubricating oil supply path 621 that is connected at one end to the temporary storage 611 and connected at the other end to a lubricating oil storage 620 that stores the lubricating oil; a deliverer 622 that is provided in the lubricating oil supply path 621 and delivers the lubricating oil stored in the lubricating oil storage 620 via the lubricating oil supply path 621 to fill the temporary storage 611; an air supply path 631 that is connected at one end to the supplier 61 and connected at the other end to a compressed air supplier 630 that supplies compressed air; and a pressure accumulator 633 provided in the air supply path 631 for accumulating the compressed air.

## Description

### TECHNICAL FIELD

The present disclosure relates to a lubricating oil supply device that supplies a lubricating oil to bearings, and a rotation test apparatus equipped therewith.

### BACKGROUND

A rotation test apparatus for performing a rotation test of a specimen such as a motor or the like is known. For example, as disclosed in Patent Document 1, the rotation test apparatus includes a rotary body such as a dynamo or the like, and a shaft (intermediate shaft) for connecting the rotary body to the specimen. The rotary body and the specimen are rotated while giving a test load (a pseudo load or a pseudo driving force) from the rotary body to the specimen, and a torque value generated between the rotary body and the specimen at that time is measured by a torque meter provided on the intermediate shaft. Then, the torque value and the like generated by the specimen are specified based on the measured torque value.

Any apparatus, which is provided with a rotating shaft and includes the above-mentioned rotation test apparatus, is provided with a bearing for rotatably supporting the shaft.

The bearing is provided with a configuration for lubricating the bearing to reduce friction and wear inside the bearing and prevent seizing of the bearing. Known methods for lubricating a bearing include a method of using grease as a lubricant (grease lubrication) and a method of using an oil as a lubricant (oil lubrication). In general, the oil lubrication is considered as being appropriate when the shaft rotates at a high speed or when the bearing needs to be cooled. For example, Patent Document 1 describes that a bearing that supports the intermediate shaft of the rotation test apparatus is lubricated by oil lubrication.

Although collectively called as oil lubrication, there are various methods of supplying an oil (lubricating oil) to a bearing (*see*, e.g., Patent Document 2). For example, there are known a method (oil jet lubrication) in which a lubricating oil stored in a tank is sucked up by a pump, sent out to a nozzle, and injected from the nozzle at a predetermined pressure, a method (oil mist lubrication) in which a lubricating oil is made mist with compressed air and is sprayed, a method (oil air lubrication) in which compressed air and a lubricating oil are mixed by a mixing valve or the like and are supplied in an oil air state, and so forth. An appropriate method may be selected according to usage conditions of a bearing.

### [Prior Art Documents]

Patent Documents
Patent Document 1: Japanese Patent Laid-open Publication No. 2019-28041
Patent Document 2: Japanese Patent No. 3924980

For example, in the rotation test apparatus, in order to specify the torque value generated by the specimen with high accuracy based on the torque value measured by the torque meter provided on the intermediate shaft, fluctuation (variation) of a torque loss generated by the intermediate shaft needs to be kept as small as possible. However, when the lubricating oil is supplied to the bearing provided on the intermediate shaft by oil jet lubrication, pulsation of the pump that sucks up the lubricating oil from the tank storing the lubricating oil and delivers the lubricating oil to the nozzle directly affects the bearing, which causes the torque loss in the intermediate shaft to fluctuate. Therefore, oil mist lubrication or oil air lubrication, which is not affected by the pulsation of the pump, is appropriate as a method of supplying the lubricating oil to the bearing provided on the intermediate shaft.

In addition, since the torque loss in the intermediate shaft varies by a viscosity and the like of the lubricating oil supplied to the bearing, it is preferable that an amount of the lubricating oil supplied to the bearing is small in order to suppress a fluctuation range of the torque loss. In this respect, the oil mist lubrication and the oil air lubrication can reduce the amount of the lubricating oil supplied to the bearing to a much smaller amount than the oil jet lubrication (for example, the amount of the lubricating oil supplied to the bearing per unit time in the oil mist lubrication is about 1/10 of that in the oil jet lubrication, and the amount of the lubricating oil supplied to the bearing per unit time in the oil air lubrication is about 1/100 of that in the oil jet lubrication). From this point of view, the oil mist lubrication or the oil air lubrication is preferable as a mode of supplying the lubricating oil to the bearing provided on the intermediate shaft. The oil air lubrication is particularly preferable.

A supply of electric power to an apparatus may be unexpectedly stopped due to, for example, a sudden power outage. In any apparatus which is provided with a rotating shaft and includes a rotation test apparatus, the shaft continues to rotate due to inertial rotation for a while even after the supply of electric power to the apparatus is stopped. A duration of the inertial rotation grows longer as the number of rotations of the shaft increases and as the moment of inertia of the shaft increases.

However, in the event of a power outage or the like, the supply of electric power to a mechanism for supplying a lubricating oil to a bearing is also stopped. For example, when the lubricating oil is supplied by the oil jet lubrication, the supply of electric power to a pump that sucks up the lubricating oil from a tank or the like storing the lubricating oil and delivers the lubricating oil to a nozzle is stopped. Further, for example, when the lubricating oil is supplied by the oil mist lubrication or the oil air lubrication, the supply of electric power to an air compressor that supplies compressed air for generating the oil mist or the oil air is stopped. In either case, the supply of the lubricating oil to the bearing is stopped. In other words, when a power outage or the like occurs, there may occur a state in which the shaft continues to rotate due to inertial rotation without the lubricating oil being supplied to the bearing for a while.

In the case of the oil jet lubrication, the amount of the lubricating oil supplied to the bearing per unit time is relatively large. Therefore, the bearing always retains a certain amount of lubricating oil. Accordingly, even when the supply of electric power is stopped due to a power outage or the like and the supply of the lubricating oil to the bearing is also stopped, it is unlikely that the lubricating oil runs out before the inertial rotation of the shaft is stopped.

On the other hand, in the case of the oil mist lubrication or the oil air lubrication, the amount of the lubricating oil supplied to the bearing per unit time is very small. Therefore, when the supply of electric power is stopped due to a power outage or the like and the supply of the lubricating oil to the bearing is also stopped, the lubricating oil may be depleted before the inertial rotation of the shaft is stopped, resulting in damage to the bearing.

The present disclosure has been made to solve the above-mentioned problems. It is an object of the present disclosure to provide a technique capable of preventing a bearing from being damaged due to inertial rotation of a shaft when a supply of electric power is stopped by a power outage or the like.

### SUMMARY

The present disclosure has taken the following measures to achieve the above object.

That is, the present disclosure provides a lubricating oil supply device for supplying a lubricating oil to a bearing, including: a supplier provided with a temporary storage unit for temporarily storing the lubricating oil, and configured to supply the lubricating oil stored in the temporary storage to the bearing little by little together with compressed air; a lubricating oil supply path having one end portion connected to the temporary storage and the other end portion connected to a lubricating oil storage for storing the lubricating oil; a deliverer provided in the lubricating oil supply path, and configured to deliver the lubricating oil stored in the lubricating oil storage via the lubricating oil supply path to fill the temporary storage with the lubricating oil; an air supply path having one end portion connected to the supplier and the other end portion connected to a compressed air supplier for supplying the compressed air; and a pressure accumulator provided in the air supply path and configured to accumulate the compressed air.

With this configuration, when the supply of the compressed air from the compressed air supplier is stopped because the supply of electric power is stopped due to a power outage or the like, the compressed air stored in the pressure accumulator is supplied to the supplier to continuing the supply of the compressed air to the supplier. Therefore, the supplier can continue to supply the lubricating oil stored in the temporary storage to the bearing little by little together with the compressed air supplied from the pressure accumulator. That is, even when the supply of electric power is stopped, the supply of the lubricating oil to the bearing is not immediately stopped, and the supply of the lubricating oil to the bearing can continue for a while. As a result, it is possible to avoid damage to the bearing due to inertial rotation of the shaft.

In particular, with the above configuration, the pressure accumulator is provided in the air supply path. Therefore, when the supply of the compressed air from the compressed air supply part is stopped so that the internal pressure of the air supply path decreases, the internal pressure of the pressure accumulator becomes relatively higher than the internal pressure of the air supply path, and the compressed air stored in the pressure accumulator is naturally fed to the supplier via the air supply path. Accordingly, it is not necessary to provide a configuration for switching a supply source of the compressed air for the supplier between the compressed air supplier and the pressure accumulator. Further, since the pressure accumulator is provided in the air supply path, when the supply of the compressed air from the compressed air supply part is resumed, the compressed air supplied from the compressed air supply part is accumulated in the pressure accumulator. Accordingly, it is not necessary to separately provide a configuration for replenishing the pressure accumulator with the compressed air. As described above, with the above configuration, a device configuration can be simplified.

In the lubricating oil supply device, the supplier is preferably configured to generate an oil air.

In the lubricating oil supply device, the supplier is preferably configured to generate an oil mist.

With these configurations, the amount of the lubricating oil supplied to the bearing can be suppressed to be a particularly small amount. As the supply amount of the lubricating oil decreases, a risk that when the supply of electric power is stopped due to a power outage or the like, the lubricating oil is depleted and the bearing is damaged until the inertial rotation of the shaft stops increases. However, in the above-described configurations, the supply of the lubricating oil to the bearing can continue for a while after the supply of electric power is stopped. Therefore, the above-mentioned situation can be avoided in advance.

In addition, the lubricating oil supply device preferably further includes an electromagnetic valve provided in a middle of the air supply path and between the pressure accumulator and the supplier, wherein the electromagnetic valve is preferably configured to, when a supply of electric power is stopped, maintain a state of the electromagnetic valve immediately before the supply of electric power is stopped.

For example, when the shaft is rotating, the electromagnetic valve is in an open state and the lubricating oil is supplied from the lubricating oil supply to the bearing. With this configuration, when the supply of electric power is stopped due to a power outage or the like under the state described above, the electromagnetic valve is maintained in the open state. Accordingly, the supply of the compressed air from the pressure accumulator to the supplier is not hindered by the electromagnetic valve. On the other hand, when the shaft is not rotating, the electromagnetic valve is in a closed state and the lubricating oil is not supplied from the lubricating oil supply to the bearing. In such a state, when the supply of electric power is stopped due to a power outage or the like, the electromagnetic valve is maintained in the closed state. Accordingly, a situation does not occur in which the lubricating oil starts to be supplied to the bearing even when the shaft is not rotating.

In addition, the lubricating oil supply device according to the configurations described above is preferably applied to a rotation test apparatus configured to perform a rotation test for a specimen, including: a rotary body; an intermediate shaft configured to connect the specimen and the rotary body; a bearing configured to rotatably support the intermediate shaft; and a torque detector configured to detect a torque generated between the specimen and the rotary body.

According to the present disclosure, it is possible to prevent a bearing from being damaged due to inertial rotation of a shaft when a supply of electric power is stopped by a power outage or the like.

### BRIEF DESCRIPTION OF DRAWINGS

FIG. 1 is a diagram showing a schematic configuration of a rotation test apparatus according to an embodiment.
FIG. 2 is a diagram showing a schematic configuration of a portion of an intermediate shaft accommodated in a bearing housing.
FIG. 3 is a block diagram showing a configuration of a lubricating oil supply.

### DETAILED DESCRIPTION

Embodiments of the present disclosure will now be described with reference to the drawings.

### <1. Overall Configuration of Rotation Test Apparatus>

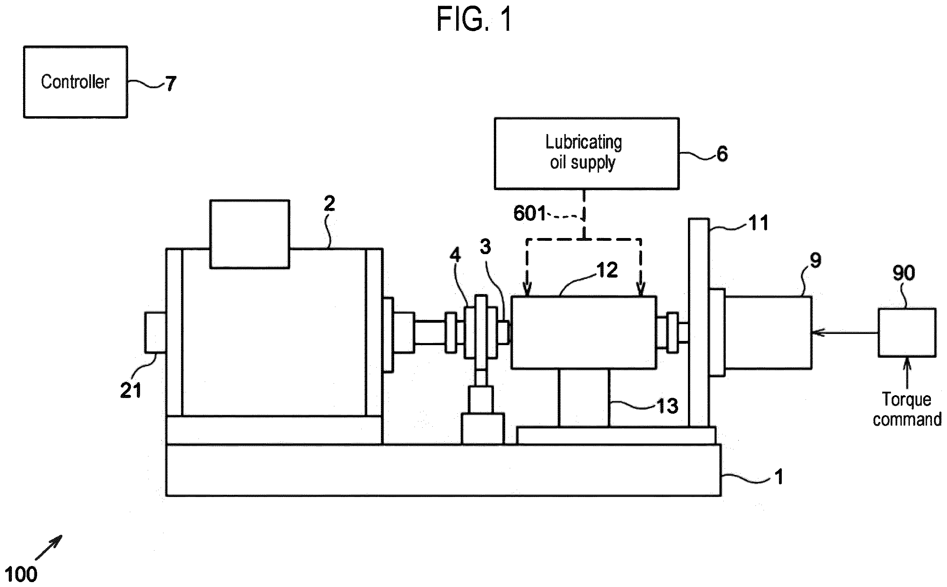

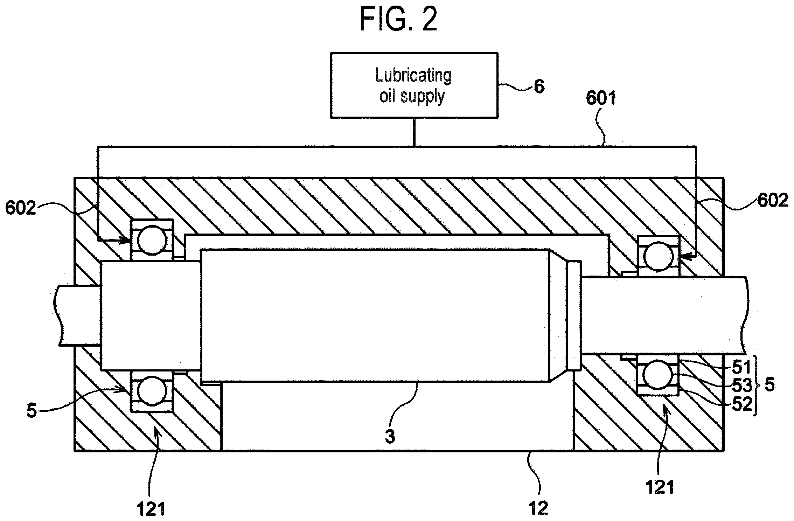

A configuration of a rotation test apparatus 100 according to an embodiment will be described with reference to FIGS. 1 and 2. FIG. 1 is a diagram showing a schematic configuration of the rotation test apparatus 100. FIG. 2 is a diagram showing a schematic configuration of a portion of an intermediate shaft 3 accommodated in a bearing housing 12, and the bearing housing 12 is shown in cross section.

The rotation test apparatus 100 is a test apparatus for rotating a specimen 9 and obtaining various measurement data of the specimen 9. A control device 90 for driving and controlling the specimen 9 is connected to the specimen 9. The control device 90 is configured to supply electric power to the specimen 9 according to a torque command input from the outside to control a torque of the specimen 9. The specimen 9 may be, for example, a motor or transmission for vehicle. In this case, the rotation test apparatus 100 constitutes a vehicle test apparatus.

The rotation test apparatus 100 includes a base 1, a dynamo 2 as a rotary body, the intermediate shaft 3 as a rotating shaft that connects the dynamo 2 and the specimen 9, and a torque meter 4 as a torque detector provided on the intermediate shaft 3 to detect a torque generated between the dynamo 2 and the specimen 9. The rotation test apparatus 100 further includes a pair of bearings (intermediate bearings) 5 and 5 that rotatably support the intermediate shaft 3, and a lubricating oil supply 6 that supplies a lubricating oil to each bearing 5. The rotation test apparatus 100 further includes a controller 7 that controls respective components of the rotation test apparatus 100.

The dynamo 2 is a rotary body for applying a test load (e.g., a pseudo load, or a pseudo driving force) to the specimen 9, and is composed of an electric motor having a controllable rotation speed. In addition, the dynamo 2 is provided with a rotational speed sensor 21 for detecting the rotational speed thereof.

The intermediate shaft 3 is a rotary shaft that connects the dynamo 2 and the specimen 9. That is, the intermediate shaft 3 has one end portion connected to the dynamo 2 (specifically, a rotor thereof) disposed on a side of one end portion of the base 1, and the other end portion connected to the specimen 9 (specifically, a rotary shaft thereof) fixed to a fixed wall 11 provided on a side of the other end portion of the base 1, thereby connecting the dynamo 2 and the specimen 9. The rotor of the dynamo 2 (or the rotary shaft of the specimen 9) and the intermediate shaft 3 are connected, for example, by fastening couplings of the dynamo 2 and the intermediate shaft 3 with bolts. The intermediate shaft 3 is provided so as to pass through the bearing housing 12 supported on the base 1 via a support column 13 in an axial direction, and is rotatably supported by the pair of bearings 5 and 5 (*see* FIG. 2) supported inside the bearing housing 12.

The torque meter 4 is a torque detector that detects a torque generated between the dynamo 2 and the specimen 9, and is provided in the middle of an extension of the intermediate shaft 3. Specifically, for example, the torque meter 4 detects a difference in torsion angle generated in the intermediate shaft 3, obtains the torque generated in the intermediate shaft 3 from the detected difference in torsion angle, and outputs the torque as a torque signal to the controller 7. However, a process of calculating the torque generated in the intermediate shaft 3 from the difference in torsion angle may be performed by the controller 7 instead of the torque meter 4. In this case, a torque detector is implemented by cooperation of the torque meter 4 and the controller 7. The controller 7 specifies the torque value generated by the specimen 9 based on the torque signal (or a signal corresponding to the difference in torsion angle) acquired from the torque meter 4.

The bearing 5 is a member for rotatably supporting the intermediate shaft 3 and is supported inside the bearing housing 12 having a cylindrical shape. Specifically, a bearing support 121 is provided inside the bearing housing 12 in a vicinity of each end portion in the axial direction, and the bearing 5 is supported by the bearing support 121. The intermediate shaft 3 is provided so as to pass through the bearing housing 12 in the axial direction at a portion between the end portion connected to the specimen 9 and a position where the torque meter 4 is provided. A portion of the intermediate shaft 3 passing through the bearing housing 12 is rotatably supported by the bearings 5 at two points spaced apart from each other in the axial direction.

The bearing 5 disposed on a side of the dynamo 2 and the bearing 5 disposed on a side of the specimen 9 have the same structure. That is, each bearing 5 is composed of a rolling bearing (a deep groove ball bearing in the illustrated example) that includes an inner ring 51 fit to an outer circumferential surface of the intermediate shaft 3, an outer ring 52 fixed to the bearing support 121, and a plurality of rolling bodies 53 that roll in a state of being sandwiched between the inner ring 51 and the outer ring 52. With such a configuration, the intermediate shaft 3 is rotatably supported by rolling movements of the rolling bodies 53 of each bearing 5.

The lubricating oil supply 6 is a device (a lubricating oil supply device) for supplying a lubricating oil to each bearing 5. As schematically shown in FIG. 2, the lubricating oil supply 6 is configured to supply the lubricating oil to each bearing 5 via a first supply path 601 connected to the bearing housing 12 and a second supply path 602 provided to penetrate the bearing housing 12. A direction in which the lubricating oil is supplied to each bearing 5 is a direction from a side of an end portion of the bearing housing 12 toward a center thereof in the axial direction. Although not shown in the drawings, the intermediate shaft 3 has such a shape that a diameter thereof lightly decreases toward the center of the bearing housing 12 in the axial direction. As a result, the lubricating oil supplied from the side of one end portion of each bearing 5 flows toward the other end portion.

Although not shown in the drawings, excess lubricating oil supplied to each bearing 5 is discharged to the outside and recovered via a discharge passage (e.g., a discharge passage including a first discharge passage provided to penetrate the bearing housing 12 and a second discharge passage disposed outside the bearing housing 12).

### <2. Configuration of Lubricating Oil Supply>

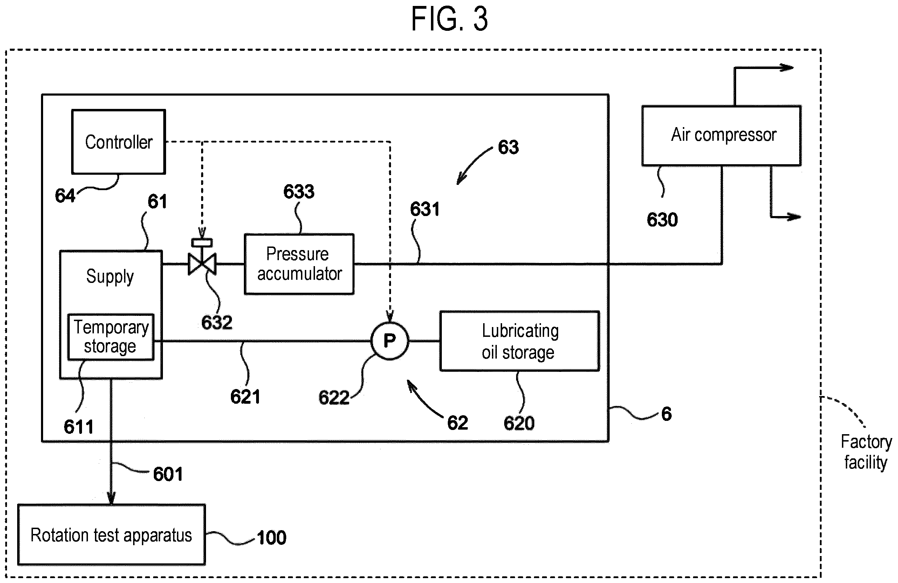

A configuration of the lubricating oil supply 6 will be described with reference to FIG. 3 in addition to FIGS. 1 and 2. FIG. 3 is a block diagram showing a schematic configuration of the lubricating oil supply 6.

The lubricating oil supply 6 includes a supplier 61 that supplies the lubricating oil to the bearing 5 together with compressed air, a lubricating oil supplier 62 that supplies the lubricating oil to the supplier 61, and an air supplier 63 for supplying compressed air to the supplier 61. The lubricating oil supply 6 further includes a controller 64 that controls respective components constituting the lubricating oil supply 6. A part or all of functions of the controller 64 may be implemented by the controller 7 of the rotation test apparatus 100.

### (Lubricating Oil Supplier 62)

The lubricating oil supplier 62 includes a lubricating oil supply path 621 and a pump 622 provided in the lubricating oil supply path 621.

The lubricating oil supply path 621 is, for example, a pipe, and has one end portion connected to the supplier 61 (specifically, a temporary storage 611 provided in the supplier 61), and the other end portion connected to a lubricating oil storage (oil tank) 620 that stores the lubricating oil.

The pump 622 delivers the lubricating oil stored in the lubricating oil storage 620 via the lubricating oil supply path 621 to fill the temporary storage 611 provided in the supplier 61. The pump 622 is configured to suck up and deliver a preset amount of the lubricating oil from the lubricating oil storage 620 by a single delivery operation (suck-up operation), and is controlled to perform the delivery operation at preset intervals (e.g., once every four minutes).

### (Air Supplier 63)

The air supplier 63 includes an air supply path 631, an electromagnetic valve 632 interposed in the middle of the air supply path 631, and a pressure accumulator 633 provided in the middle of the air supply path 631 at an upstream side of the electromagnetic valve 632.

The air supply path 631 is, for example, a pipe, and has one end portion connected to the supplier 61 and the other end portion connected to an air compressor 630 as a compressed air supply for supplying compressed air. As the air compressor 630, for example, an air compressor provided as factory equipment is used. The air compressor 630 is connected not only to the air supply path 631, but also to pipes connected to various apparatuses installed in a factory so as to continuously supply compressed air to various apparatuses.

The electromagnetic valve 632 is switched between an open state and a closed state in response to an electrical control signal transmitted from the controller 64. When the electromagnetic valve 632 is open, the compressed air fed by pressure from the air compressor 630 is supplied to the supplier 61 via the air supply path 631. Further, when the electromagnetic valve 632 is closed, the supply of the compressed air from the air compressor 630 to the supplier 61 is stopped. However, the electromagnetic valve 632 is configured to, when a supply of electric power is stopped due to a power outage or the like, maintain a state of the electromagnetic valve immediately before the power supply is stopped. That is, the electromagnetic valve 632 is configured so that when the supply of electric power is stopped due to a power outage or the like while the electromagnetic valve 632 is in the open state, the electromagnetic valve 632 is maintained in the open state even after the supply of electric power is stopped, and so that when the supply of electric power is stopped due to a power outage or the like while the electromagnetic valve 632 is in the closed state, the electromagnetic valve 632 is maintained in the closed state even after the supply of electric power is stopped.

The pressure accumulator 633 is a container (air tank) that stores the compressed air. The pressure accumulator 633 is provided in the middle of the air supply path 631 to accumulate the compressed air supplied from the air compressor 630. When the supply of electric power to the air compressor 630 is stopped due to a power outage or the like and the supply of the compressed air from the air compressor 630 is stopped, an internal pressure of the air supply path 631 decreases, and an internal pressure of the pressure accumulator 633 becomes relatively higher than the internal pressure of the air supply path 631. As a result, the compressed air stored in the pressure accumulator 633 is naturally sent out to the supplier 61 via the air supply path 631. Thereafter, when the supply of the compressed air from the air compressor 630 is resumed, the compressed air supplied from the air compressor 630 is accumulated in the pressure accumulator 633 due to a reverse pressure difference.

### (Supplier 61)

The supplier 61 includes the temporary storage 611 that temporarily stores the lubricating oil supplied from the lubricating oil supplier 62. The temporary storage 611 is a container (e.g., a dish-shaped container) capable of storing at least the lubricating oil delivered by a single delivery operation of the pump 622. A total amount of the lubricating oil delivered via the lubricating oil supply path 621 by every delivery operation of the pump 622 is temporarily stored in the temporary storage 611.

The supplier 61 supplies the lubricating oil stored in the temporary storage 611 to the bearing 5 little by little (at a predetermined amount) together with the compressed air. In the present embodiment, the supplier 61 is configured to include an oil air generator. In this case, in the supplier 61, the lubricating oil stored in the temporary storage 611 is intermittently discharged at a predetermined minute amount by a piston or the like. The minute amount of the discharged lubricating oil is introduced into the compressed air by a mixing valve or the like, and is mixed with the compressed air one after another, thereby continuously generating an oil air. The oil air thus generated is sent to the first supply path 601 and the second supply path 602 in this order by the compressed air supplied from the air supplier 63, and is supplied to each bearing 5.

However, the amount of the lubricating oil delivered by a single delivery operation of the pump 622 is set based on an amount of the lubricating oil mixed with the compressed air per unit time in the supplier 61 and an interval at which the pump 622 performs the delivery operation. In addition, it is ensured that the lubricating oil stored in the temporary storage 611 is not depleted during the interval of the delivery operation of the pump 622. For example, when the supplier 61 is configured to include the oil air generator that generates the oil air, the amount of the lubricating oil mixed with the compressed air per unit time in the supplier 61 is approximately 0.002 ml/min. In this case, assuming that the pump 622 performs one delivery operation for four minutes, the amount of the lubricating oil delivered by one delivery operation of the pump 622 is set to 0.008 ml or more.

### <3. Operations of Lubricating Oil Supply>

The lubricating oil supply 6 supplies the lubricating oil to the bearing 5 provided on the intermediate shaft 3 while the rotation test apparatus 100 is in operation. Operations of the lubricating oil supply 6 will be described with reference to FIGS. 1 to 3.

In a normal state in which electric power is supplied (during power supply), the pump 622 performs the delivery operation at preset intervals. In every delivery operation, the pump 622 sucks up a preset amount of the lubricating oil from the lubricating oil storage 620, delivers the lubricating oil via the lubricating oil supply path 621, and fills the temporary storage 611 with the lubricating oil.

On the other hand, in the normal state in which electric power is supplied, the compressed air is fed by pressure from the air compressor 630 to the air supply path 631. When the electromagnetic valve 632 is switched from the closed state to the open state in response to the control signal sent from the controller 64, the compressed air supplied from the air compressor 630 starts to be supplied to the supplier 61 via the air supply path 631.

In the supplier 61, the lubricating oil stored in the temporary storage 611 is mixed little by little (at a predetermined amount) with the compressed air supplied from the air supply path 631, thereby generating the oil air. The oil air is introduced into the first supply path 601. The introduced oil air is supplied to each bearing 5 via the first supply path 601 and the second supply path 602. As a result, the bearings 5 that support the rotating intermediate shaft 3 are lubricated.

It is assumed that the supply of electric power is stopped due to a power outage or the like while such the operations described above is being performed. Here, it is assumed that not only the supply of electric power to the rotation test apparatus 100 is stopped but also the supply of electric power to the entire factory facility in which the rotation test apparatus 100 is installed is stopped. That is, a case is assumed in which an air compressor installed as factory equipment is used as the air compressor 630 and a supply of electric power to the air compressor is also stopped.

Even when the supply of electric power is stopped, the intermediate shaft 3 of the rotation test apparatus 100 continues to rotate for a while (e.g., for several minutes) due to inertial rotation.

On the other hand, when the supply of electric power is stopped, the operation of the pump 622 is stopped. As a result, the temporary storage 611 is no longer filled with new lubricating oil. However, as described above, the pump 622 is set to deliver a substantial amount of the lubricating oil (i.e., more than a total amount of the lubricating oil consumed during the interval between the delivery operations) by a single delivery operation.
Considering the fact that in general, the electromagnetic valve 632 is switched from the closed state to the open state (that is, the generation of the oil air is started) with some time lag after the temporary storage 611 is filled with the lubricating oil for the first time, the amount of the lubricating oil held in the temporary storage 611 does not become zero even at a timing immediately before the pump 622 performs the delivery operation. That is, regardless of the timing at which the operation of the pump 622 is stopped, the temporary storage 611 holds a sufficiently larger amount of the lubricating oil than the amount of the lubricating oil mixed with the compressed air per unit time in the supplier 61.

In addition, when the supply of electric power is stopped, the operation of the air compressor 630 is also stopped, and the supply of the compressed air from the air compressor 630 is stopped. Thus, the internal pressure of the air supply path 631 decreases, the internal pressure of the pressure accumulator 633 becomes higher than the internal pressure of the air supply path 631, and the compressed air accumulated in the pressure accumulator 633 is naturally fed to the supplier 61 via the air supply path 631. Further, although the electromagnetic valve 632 is provided on a downstream side of the pressure accumulator 633, the electromagnetic valve 632 is configured to when the supply of electric power is stopped due to a power outage or the like, maintain the state immediately before the supply of electric power is stopped. Here, since the electromagnetic valve 632 is in the open state immediately before the supply of electric power is stopped, the electromagnetic valve 632 is maintained in the open state even after the supply of electric power is stopped due to a power outage or the like. Accordingly, the delivery of the compressed air from the pressure accumulator 633 to the supplier 61 is not hindered by the electromagnetic valve 632.

As described above, even after the supply of electric power is stopped, the supply of the compressed air to the supplier 61 continues. Therefore, the supplier 61 can continuously perform the same operation as the operation during the supply of electric power. That is, in the supplier 61, the lubricating oil stored in the temporary storage 611 is mixed little by little with the compressed air supplied from the air supply path 631 to generate the oil air, and the oil air is introduced into the first supply path 601. The oil air thus introduced is supplied to each bearing 5 via the first supply path 601 and the second supply path 602. As a result, the bearings 5 that support the intermediate shaft 3 rotating by inertia are lubricated.

When the supply of electric power is resumed due to restoration of a power outage or the like, the supply of the compressed air from the air compressor 630 is resumed. Then, the compressed air fed by pressure from the air compressor 630 causes the internal pressure of the air supply path 631 to become higher than the internal pressure of the pressure accumulator 633, and the compressed air supplied from the air compressor 630 is accumulated in the pressure accumulator 633. In this way, the pressure accumulator 633 returns to a pressure-accumulated state immediately after the supply of electric power is restarted. Needless to say, while the compressed air supplied from the air compressor 630 is supplied to the supplier 61 via the air supply path 631, the pressure accumulator 633 is maintained to be in the pressure-accumulated state.

### <4. Effects>

The lubricating oil supply (lubricating oil supply device) 6 provided in the rotation test apparatus 100 according to the above-described embodiment includes: the supplier 61 provided with the temporary storage 611 for temporarily storing the lubricating oil, and configured to supply the lubricating oil stored in the temporary storage 611 to the bearing 5 little by little together with the compressed air; the lubricating oil supply path 621 having one end portion connected to the temporary storage 611 and the other end portion connected to the lubricating oil storage 620 for storing the lubricating oil; the pump 622 as a deliverer provided in the lubricating oil supply path 621 and configured to deliver the lubricating oil stored in the lubricating oil storage 620 via the lubricating oil supply path 621 to fill the temporary storage 611 with the lubricating oil; the air supply path 631 having one end portion connected to the supplier 61 and the other end portion connected to the air compressor 630 as a compressed air supply for supplying the compressed air; and the pressure accumulator 633 provided in the air supply path 631 and configured to accumulate the compressed air.

With this configuration, when the supply of the compressed air from the air compressor 630 is stopped because the supply of electric power is stopped due to a power outage or the like, the compressed air stored in the pressure accumulator 633 is supplied to the supplier 61, continuing the supply of the compressed air to the supplier 61. Therefore, the supplier 61 can continue to supply the lubricating oil stored in the temporary storage 611 to the bearing 5 little by little together with the compressed air supplied from the pressure accumulator 633. That is, even when the supply of electric power is stopped, the supply of the lubricating oil to the bearing 5 is not immediately stopped, and the supply of the lubricating oil to the bearing 5 can continue for a while. As a result, it is possible to avoid damage to the bearing 5 due to inertial rotation of the intermediate shaft 3.

In particular, with the above configuration, the pressure accumulator 633 is provided in the air supply path 631. Therefore, when the supply of the compressed air from the air compressor 630 is stopped so that the internal pressure of the air supply path 631 decreases, the internal pressure of the pressure accumulator 633 becomes relatively higher than the internal pressure of the air supply path 631, and the compressed air stored in the pressure accumulator 633 is naturally fed to the supplier 61 via the air supply path 631. Accordingly, it is not necessary to provide a configuration for switching a supply source of the compressed air for the supplier 61 between the air compressor 630 and the pressure accumulator 633. Further, since the pressure accumulator 633 is provided in the air supply path 631, when the supply of the compressed air from the air compressor 630 is resumed, the compressed air supplied from the air compressor 630 is accumulated in the pressure accumulator 633. Accordingly, there it is not necessary to separately provide a configuration for replenishing the pressure accumulator 633 with the compressed air. As described above, with the above configuration, a device configuration can be simplified.

In addition, in the lubricating oil supply 6 according to the above-described embodiment, the supplier 61 is configured to generate the oil air. With this configuration, the amount of the lubricating oil supplied to the bearing 5 can be suppressed to be a particularly small amount.
As the supply amount of the lubricating oil decreases, a risk that when the supply of electric power is stopped due to a power outage or the like, the lubricating oil is depleted and the bearing 5 is damaged until the inertial rotation of the intermediate shaft 3 stops increases. However, in the above-described embodiment, the supply of the lubricating oil to the bearing 5 can continue for a while after the supply of electric power is stopped. Therefore, the above-mentioned situation can be avoided in advance.

In addition, the lubricating oil supply 6 according to the above-described embodiment further includes: the electromagnetic valve 632 provided in the middle of the air supply path 631 and between the pressure accumulator 633 and the supplier 61. The electromagnetic valve 632 is configured to, when the supply of electric power is stopped, maintain the state immediately before the supply of electric power is stopped. For example, when the intermediate shaft 3 is rotating, the electromagnetic valve 632 is in the open state and the lubricating oil is supplied from the lubricating oil supply 6 to the bearing 5. With this configuration, when the supply of electric power is stopped due to a power outage or the like under the state described above, the electromagnetic valve 632 is maintained in the open state. Accordingly, the supply of the compressed air from the pressure accumulator 633 to the supplier 61 is not hindered by the electromagnetic valve 632. On the other hand, when the intermediate shaft 3 is not rotating, the electromagnetic valve 632 is in the closed state and the lubricating oil is not supplied from the lubricating oil supply 6 to the bearing 5. In such a state, when the supply of electric power is stopped due to a power outage or the like, the electromagnetic valve 632 is maintained in the closed state. Accordingly, a situation does not occur in which the lubricating oil starts to be supplied to the bearing 5 even when the intermediate shaft 3 is not rotating.

In addition, in the lubricating oil supply 6 according to the above-described embodiment, the supplier 61 supplies the lubricating oil stored in the temporary storage 611 to the bearing 5 little by little together with the compressed air. When the lubricating oil is supplied to the bearing 5 by, for example, oil jet lubrication, a torque loss in the intermediate shaft 3 may fluctuate due to pulsation of the pump that sucks up the lubricating oil from the tank storing the lubricating oil and delivers the lubricating oil to the nozzle. However, with the lubricating oil supply 6 according to the present embodiment, the lubricating oil delivered from the pump 622 is first temporarily stored in the temporary storage 611, and is then supplied to the bearing 5 together with the compressed air. Therefore, there is no possibility that the pulsation of the pump 622 causes fluctuation of the torque loss in the intermediate shaft 3. By suppressing fluctuation in the torque loss in the intermediate shaft 3, it becomes possible to specify the torque value generated by the specimen 9 with high accuracy.

In addition, with the configuration in which the supplier 61 supplies the lubricating oil stored in the temporary storage 611 to the bearing 5 little by little together with the compressed air, the amount of the lubricating oil supplied to the bearing 5 can be made smaller than, for example, that in the oil jet lubrication. Accordingly, it is possible to reduce fluctuation in the torque loss in the intermediate shaft 3, which may be caused by a viscosity of the lubricating oil or the like. As a result, it becomes possible to specify the torque value generated by the specimen 9 with high accuracy.

### <5. Other Embodiments>

In the above-described embodiment, the supplier 61 generates the oil air. Alternatively, the supplier may generate an oil mist. That is, the method of supplying the lubricating oil to the bearing 5 little by little (at a predetermined amount) together with the compressed air is not limited to the method in which the lubricating oil and the compressed air are mixed to generate the oil air and supply the oil air to the bearing 5, but may be a method in which the compressed air is used to mist the lubricating oil to generate an oil mist and supply the oil mist to the bearing 5. Such a configuration can be implemented, for example, by making the supplier 61, which is configured to include the oil air generator in the above-described embodiment, include an oil mist generator in place of the oil air generator. In this case, in the supplier 61, the lubricating oil stored in the temporary storage 611 is supplied to the compressed air at a predetermined very small amount, and droplets of the lubricating oil are divided into a mist shape (fog shape) in the compressed air, whereby the oil mist is generated. Then, the generated oil mist is mixed with the compressed air supplied from the air supplier 63, sequentially sent to the first supply path 601 and the second supply path 602 by the compressed air, and supplied to each bearing 5. Even when the supplier is configured to generate the oil mist, the same effects as those of the above-described embodiment can be obtained.

In addition, in the above-described embodiment, the bearing 5 may have any structure. For example, the bearing 5 may be a ball bearing in which the rolling bodies 53 are composed of balls as shown in FIG. 2, or may be a roller bearing in which the rolling bodies are composed of rollers.

In addition, in the above-described embodiment, the pressure accumulator 633 may be configured by an accumulator.

In addition, in the above-described embodiment, the lubricating oil is supplied from the outside of the bearing housing 12 toward the center thereof in the axial direction and is allowed to flow toward the center. However, the direction of supplying the lubricating oil is not limited thereto. For example, the lubricating oil may be supplied from the center of the bearing housing 12 toward the outside thereof in the axial direction and may be allowed to flow toward the outside.

In addition, in the above-described embodiment, a motor or transmission for vehicle is exemplified as the specimen 9 to be tested by the rotation test apparatus 100. However, the specimen 9 is not limited thereto. That is, the present disclosure may be applied to various rotation test apparatuses other than the vehicular test apparatus.

In addition, in the above-described embodiment, the lubricating oil supply 6 is applied to the rotation test apparatus 100. However, the lubricating oil supply 6 may be applied to apparatuses other than the rotation test apparatus 100. That is, the lubricating oil supply 6 can be applied to any apparatus equipped with a bearing and adopting a method of supplying a lubricating oil to the bearing together with compressed air to lubricate the bearing (e.g., oil mist lubrication or oil air lubrication).

Other configurations can also be modified in various ways without departing from the spirit of the present disclosure.

### EXPLANATION OF REFERENCE NUMERALS

100: rotation test apparatus, 1: base, 2: rotary body (dynamo), 3: intermediate shaft, 4: torque detector (torque meter), 5: bearing, 6: lubricating oil supply (lubricating oil supply device), 61: supplier, 611: temporary storage, 62: lubricating oil supplier, 620: lubricating oil storage, 621: lubricating oil supply path, 622: deliverer (pump), 63: air supplier, 630: compressed air supplier (air compressor), 631: air supply path, 632: electromagnetic valve, 633: pressure accumulator, 64: controller, 7: controller, 9: specimen (specimen motor)

## Claims

1. A lubricating oil supply device for supplying a lubricating oil to a bearing, comprising:
a supplier provided with a temporary storage for storing the lubricating oil temporarily, and configured to supply the lubricating oil stored in the temporary storage to the bearing little by little together with compressed air;
a lubricating oil supply path having one end portion connected to the temporary storage and the other end portion connected to a lubricating oil storage for storing the lubricating oil;
a deliverer provided in the lubricating oil supply path, and configured to deliver the lubricating oil stored in the lubricating oil storage via the lubricating oil supply path to fill the temporary storage with the lubricating oil;
an air supply path having one end portion connected to the supplier and the other end portion connected to a compressed air supplier for supplying the compressed air; and
a pressure accumulator provided in the air supply path and configured to accumulate the compressed air.

2. The lubricating oil supply device of Claim 1, wherein the supplier is configured to generate an oil air.

3. The lubricating oil supply device of Claim 1, wherein the supplier is configured to generate an oil mist.

4. The lubricating oil supply device of any one of Claims 1 to 3, further comprising an electromagnetic valve provided in a middle of the air supply path and between the pressure accumulator and the supplier,
wherein the electromagnetic valve is configured to, when a supply of electric power is stopped, maintain a state of the electromagnetic valve immediately before the supply of electric power is stopped.

5. A rotation test apparatus provided with the lubricating oil supply device of any one of Claims 1 to 4 and configured to perform a rotation test for a specimen, comprising:
a rotary body;
an intermediate shaft configured to connect the specimen and the rotary body;
a bearing configured to rotatably support the intermediate shaft; and
a torque detector configured to detect a torque generated between the specimen and the rotary body.
